Europäisches Patentamt

European Patent Office

Office européen des brevets

(19)

(11) Numéro de publication: **0 199 652**
**B1**

(12) **FASCICULE DE BREVET EUROPEEN**

(45) Date de publication du fascicule du brevet: **22.11.90**

(51) Int. Cl.⁵: **B 60 P 1/14**

(21) Numéro de dépôt: **86400887.5**

(22) Date de dépôt: **23.04.86**

(54) Dispositif de manoeuvre de conteneur.

(30) Priorité: **24.04.85 FR 8506299**

(43) Date de publication de la demande:
**29.10.86 Bulletin 86/44**

(45) Mention de la délivrance du brevet:
**22.11.90 Bulletin 90/47**

(84) Etats contractants désignés:
**AT BE CH DE GB IT LI LU NL SE**

(56) Documents cités:
**FR-A- 615 102**
**FR-A- 753 603**
**FR-A-2 252 231**
**FR-A-2 298 455**
**US-A-3 944 095**

(73) Titulaire: **Peyre, Xavier**
**Ruvéré - Chemin de Ruvéré**
**F-22170 Chatelaudren (FR)**

(72) Inventeur: **Peyre, Xavier**
**Ruvéré - Chemin de Ruvéré**
**F-22170 Chatelaudren (FR)**

(74) Mandataire: **Loyer, Bertrand et al**
**Cabinet Pierre Loyer 77, rue Boissière**
**F-75116 Paris (FR)**

Courier Press, Leamington Spa, England.

## Description

La présente invention concerne un dispositif de manoeuvre de conteneur amovible, adaptable notamment sur les véhicules de transport légers, permettant le levage et la traction d'un conteneur, tel que décrit dans le preambule de la revendication 1 et connu par exemple du document FR—A—615.102.

Le transport de charges lourdes les plus diverses avec un véhicule léger est souvent l'objet de difficultés, notamment parce que le véhicule ne peut se rapprocher du lieu de chargement (ou déchargement).

Les remorques attelables sur les véhicules légers, bien connues, résolvent très simplement ce problème mais la benne qui les constitue est en général fixe, ce qui rend les opérations de déchargement difficiles.

Le FR—A1—2.252.231 du demandeur décrit un système de levage de benne adaptable sur des véhicules légers, notamment de type camionnettes. Cette benne légère, qui pivote facilement apporte une solution efficace à ce problème, mais pour décharger des matériaux fluides (par exemple eau, sable,) il faut rajouter préalablement aux manutentions une allonge tubulaire au mât de levage pour obtenir une inclinaison convenable.

La présente invention concerne un perfectionnement d'un dispositif de levage de conteneur du type connu, avec les caractéristiques exposées dans la partie caractérisante de la revendication 1, les revendications dépendantes concernent des nodes particuliers de réalisation de l'invention.

A titre d'exemple non limitatif et pour mieux comprendre l'invention, on a représenté aux dessins annexés:

Figure 1 une vue générale schématique d'un dispositif de manoeuvre de conteneur selon l'invention;

Figure 2 une vue générale schématique d'un dispositif de manoeuvre de conteneur selon l'invention dans sa fonction de bennage;

Figure 3 une vue générale schématique du dispositif de manoeuvre de conteneur selon l'invention dans sa fonction de traction de conteneur;

Figure 4 une vue générale schématique de dessus du dispositif selon l'invention;

Figure 5 une vue schématique latérale détaillée de rampe escamotable.

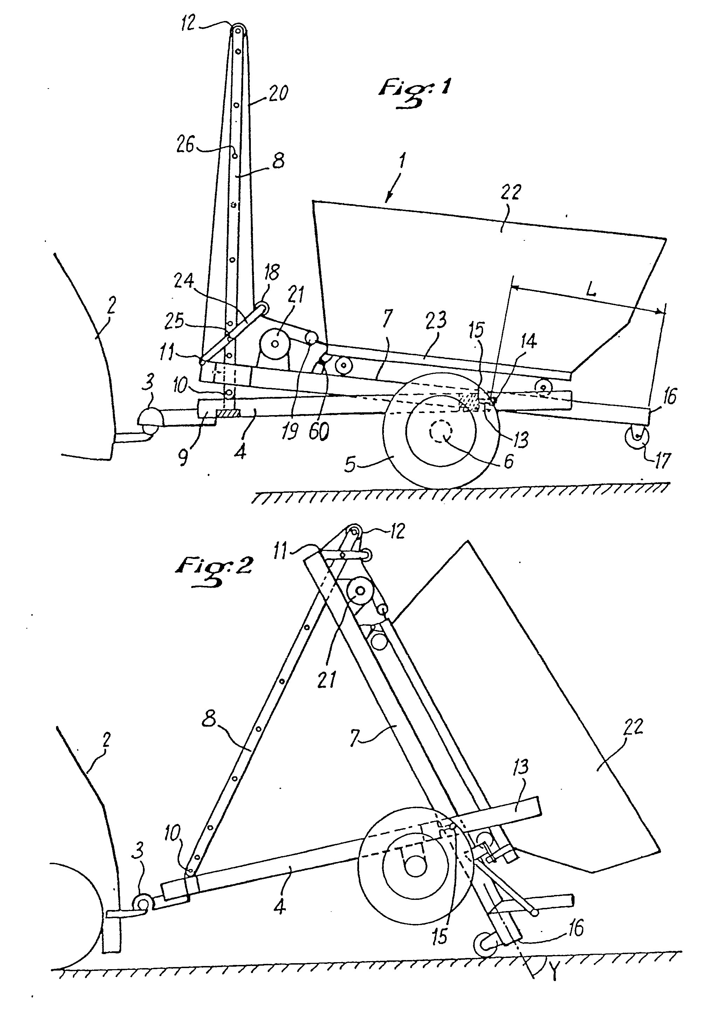

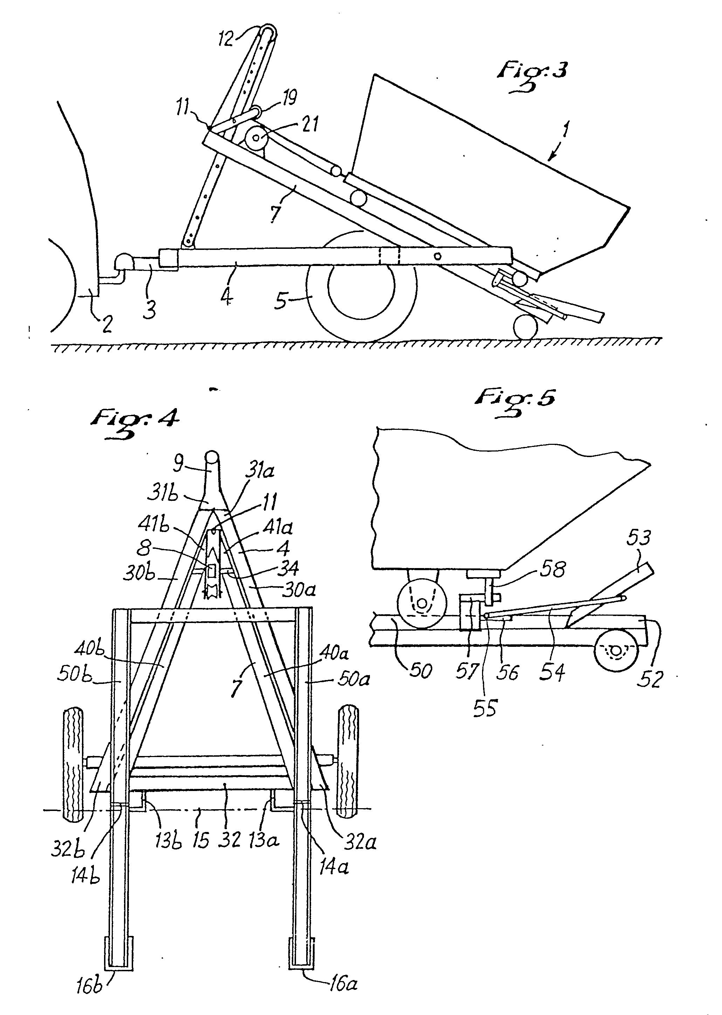

Les figures 1 et 2 présentent une forme préférentielle d'un dispositif de manoeuvre de benne amovible selon l'invention. Sur ces figures, le dispositif est en manoeuvre de bennage.

Le dispositif selon l'invention comporte une remorque 1 attelée à un véhicule léger 2 par un point d'accrochage 3. La remorque comporte un support en forme de châssis 4 monté sur deux roues 5 reliées par un essieu 6, une plate-forme 7 montée pivotante sur le support, et un mât 8 de levage de la plate-forme, solidarisé à l'avant 9 du support, articulé audit support à son extrémité inférieure 10 et coulissant dans la partie de la plate-forme qui se lève, du côté de l'extrémité 11. Le mât est percé de trous 26 sur sa longueur.

Un câble 20 accroché à l'extrémité de la plate-forme qui se lève 11 est passé dans une poulie de renvoi 12 au sommet du mât et s'enroule autour d'un treuil 21 fixé sur la plate-forme pour lever ou abaisser la dite extrémité 11, donc la plateform.

Habituellement, un tel dispositif pivote sur l'extrémité arrière de la plate-forme et l'angle maximum ¥ de bennage est proportionnel à la longueur du mât. Un des objectifs essentiels de l'invention est d'obtenir un angle Y de bennage maximum, avec un mât de hauteur réduite, pour une plate-forme et un support au moins de mêmes dimensions par rapport au dispositif connu.

L'invention consiste à faire pivoter la plate-forme 7 approximativement par son milieu autour d'un axe de pivotement 15, situé à l'arrière du support 4.

La longueur L entre l'axe de pivotement 15 et l'extrémité 16 de la plate-forme qui se baisse est supérieure à la distance de l'axe de pivotement 15 au sol, de sorte que ladite extrémité 16 touche le sol quand elle pivote vers le bas. Ainsi, après un premier pivotement autour du support, la plate-forme vient en contact avec le sol.

L'extrémité 16 de la plate-forme comporte au moins une paire de roulettes 17 ou patins d'appui sur le sol.

Lorsque l'on continu le levage, celui-ci s'effectue par une rotation de la plate-forme 7 autour du point d'appui sur le sol, c'est-a-dire selon la forme préférentielle, par une rotation sur les roulettes 17.

Ce mouvement de rotation de la plate-forme 7 autour des roues 17 s'accompagne d'un roulement desdites roues 17 et d'un levage du point de pivotement 15 et donc du support 4, et par conséquent des roues 5.

L'invention réside donc essentiellement dans le fait que la plate-forme n'est pas articulée à son extrémité postérieure, mais aux environs de son milieu. La réduction de la longueur du levier constituée par la partie de la plate-form qui se lève, permet de réduire la longueur du mât 8 tout en conservant le même angle de bennage maximum ¥.

Les dessins montrent sur la plate-forme un conteneur 22 en forme de benne monté sur un plateau roulant ou glissant 23. Afin de diminuer l'effort de levage du conteneur chargé, notamment au début du levage, lequel effort s'exerce à l'extrémité 11 du bras de levier constitué par l'avant de la plate-form, l'invention prévoit de manière préférentielle de placer l'axe de pivotement 15 le plus près possible de la verticle passant par le centre de gravité, mais derriere lui et l'essieu 16 pour assurer la stabilité de l'ensemble au repos ou pendant le transport.

Pendant le pivotement, le centre de gravité se rapproche de l'axe de pivotement et l'effort de levage se réduit progressivement jusqu'au contact des roues 17 avec le sol.

Afin de réduire les efforts du treuil 21, le câble 20 de levage est passé dans un moufle composé de trois poulies de renvoi; une première poulie 12 montée au sommet du mât, une deuxième poulie 18 solidaire de la plate-forme, placée à proximité du point d'accrochage 11 du câble 20 de façon que les deux brins de câble forment un angle aigu avec la poulie 12 de chaque côté du mât, et une poulie 19 montée à l'extrémité du plateau porte-contenur 23.

Le cable ainsi disposé permet au treuil d'assurer la fonction de bennage ou de traction sans avoir à manipuler ledit cable.

De manière préférentielle, la poulie 18 est montée sur deux tiges 24 plates, parallèles fixées sur l'extrémité avant 11 de la plate-forme, formant avec elle une angle de 45° à 60°. Ces tiges forment un guide dans lequel coulisse le mât qui oscille librement entre la poulie 18 et le point de fixation 11.

Ainsi disposé, le mât travaile uniquement par compression entre la poulie 12 et le point d'articulation 10.

Les tiges sont percées d'un trou 25 correspondant aux trous 26 du mât. Lorsque les torus 26 et 25 sont en alignement axial, une goupille ou analogue peut assurer le verrouillage en position, de la plate-forme sur le mât.

La figure 4 montre une vue schématique de dessus du dispositif selon l'invention.

Selon un mode préférentiel, le support a une forme générale en triangle isocèle. Il est formé de deux profilés 30a, 30b convergeant dans le sens longitudinal à leurs extrémités 31a et 31b, et reliés à l'extrémité 9, et d'un troisième profilé 21, transversal, soudé à proximité de l'essieu. Deux pivots 14a et 14b dans le prolongement l'un de l'autre, formant ensemble l'axe de pivotement 15 sont solidarisés au profilé 32 par l'intermédiaire de bras 13a, 13b de façon que le pivotement de la plateforme autour desdits pivots se réalise sensiblement à proximité du profilé 32.

Le support comporte en outre un renfort 34 en profilé, sur lequel d'une part ou articule le mât 8, d'autre part la plate-forme vient se reposer.

La plate-forme 7 est formée de deux profilés 40a et 40b, convergeant dans le sens longitudinal à leurs extrémités 41a et 41b et soudés à l'extrémité 11, parallèles à leurs extrémités opposées 16a et 16b. L'écartement des profilés 40a et 40b est inférieur à l'écartement des profilés 30a et 30b, de sorte que l'extrémité avant 11 de la plate-forme pénètre entre les profilés 30a, 30b du support et repose sur le renfort 34 et le profilé 32 du support. Les profilés 40 et 40b dans leurs parties parallèles comportent des cavités de pivotement dans lesquels se logent les pivots 14.

Sur ladite plate-forme 7, on peut placer tout support fixe ou amovible. Selon un mode préférentiel de l'invention, on place sur la plate-forme deux glissières 50a, 50b, parallèles, en forme de rail, l'extrémité arrière 52a, 52b correspondant à l'extrémité 16a, 16b de la plate-forme, destinées à recevoir toutes sortes de conteneurs 22 montés sur roues.

En outre l'invention prévoit avantageusement que chaque rail comporte un doigt 57 de guidage et verrouillage du conteneur mobile. Ce doigt est monté solidairement au rail, longitudinalement parallèlement et dirigé vers l'arrière de la plate-forme. Le doigt coopère avec un élément de verrouillage (58) femelle correspondant, monté solidairement sur le conteneur et avantageusement à l'arrière pour empêcher le conteneur de sortir des rails, une fois mis en place.

D'autre par figure 5, l'invention prévoit également à l'extrémité 52a, 52b des glissières, l'utilisation de deux rampes 53 d'accès ou de sortie, escamotables. Ces rampes sont de même conformation que les glissières 50a, 50b. Elles sont montées sur un pivot 55 dans la glissière 50a, 50b et commandées chacune par une biellette 54 mobile longitudinalement dans une glissière 56 accolée à ladite glissière 50 de telle sorte que le mouvement de la biellette provoque la rotation vers le haut ou le bas de la rampe. Ce mouvement longitudinal de la biellette 54 dans la glissière 56 est commandé de manière connue par le mouvement du conteneur. Cependant, selon un mode préférentiel de l'invention, l'élément de verrouillage 58 est disposé de façon à être l'organe de commande du mouvement de la biellette.

La plate-forme comporte, de préférence à l'avant, un élément de verrouillage 60 du type connu en soi du plateau porte-conteneur 23.

Le fonctionnement du dispositif selon l'invention est le suivant:

Le support est accroché à l'arrière du véhicule. Le conteneur 22 est installé sur la plate-forme 7, en position basse reposant sur les profilés 32, 34 du support 4.

Le levage de la benne est effectué ainsi: le treuil 21 est mis en action, manuellement ou par un moteur électrique. Le câble 20 guidé par les poulies 12, 18, 19 s'enroule autour dudit treuil et exerce une force de traction vers le haut sur l'extrémité 11. Compte-tenu du montage en forme de moufle, la force de traction exercée par le treuil est sensiblement moitiée de la compression qui s'exerce sur le mât.

Du fait de l'enroulement du câble, la distance entre l'extrémité 11 et le sommet du mât 8 diminue. La plate-forme, articulée au support, s'élève et pivote ainsi peu à peu et le conteneur 22 subit le même mouvement.

Lorsque les roues 17 viennent en contact avec le sol, le conteneur n'est pas en position angulaire maximum. Le treuil contunue d'enrouler le câble. La plate-forme continue de s'élever en pivotant sur la paire de roues 17. Simultanément, on peut voir les roues 5 du support s'élever, les roues 17 rouler vers l'intérieur, et le bennage s'effectue.

L'effort à fournir par le treuil est faible car la verticale passant par le centre de gravité est proche, dans un premier temps, de l'axe de pivotement 14, dans un deuxième temps de l'axe de rotation formé par les roues 17.

Par ailleurs, le mât articulé sur le support 4 tourne progressivement, librement autour de l'axe 10 de façon à rester perpendiculaire à la plate-forme. Il travaille uniquement en compression et du fait des faibles efforts à fournir peut être de construction légère.

On aurait pu cesser le mouvement de levage et bloquer la plate-forme en la verrouillant avec une goupille insérée dans l'alignement des trous 25 et 26. Lorsque la plate-forme est inclinée moyennement, et verrouillée en position, on peut alors déplacer le conteneur.

On déverrouille le verrou 60, et on actionne le treuil en sens inverse du levage. Le câble se déroule et le conteneur amorce sa descente le long des rails 50a, 50b. Les éléments de verrouillage 58 commandent la descente des rampes 53 et le conteneur peut rouler jusqu'au sol. Lorsque le conteneur est complètement descendu, on peut décrocher la poulie 19 et changer de conteneur (par exemple). Pour remonter le conteneur, il faut changer le sens de rotation du treuil; les rampes 53 remontent automatiquement, commandées par les éléments de verrouillage 58. Le conteneur est verrouillé par les éléments 57 et 58, puis bloqué par le verrou 60.

Ce perfectionnement aux dispositifs existants apporte de nombreux avantages, et notamment, il permet de réaliser une remorque très légère, maniable par une personne seule, capable de porter de lourdes charges: en effet, alors que pour les camions gros porteurs le rapport de poids à vide sur poids total en charge est de l'ordre de 1 pour 2, on atteint avec le dispositif un rapport voisin de 1 pour 10.

Du fait du recentrage de la charge, d'une part le mât et le treuil sont soulagés (pour une charge d'environ 1 tonne, l'effort sur le treuil est de l'ordre de 150 kg), ce qui permet d'utiliser un mât très léger et un treuil peu puissant donc peu coûteux; d'autre part, les efforts d'arrachement de la boule de fixation 3 sont supprimés, et le support est stable horizontalement sans l'aide de béquilles d'appui à l'arrière.

En outre l'extrémité avant du support subissant uniquement un effort d'abaissement, le bennage peut s'effectuer sans que la remorque soit solidaire d'un véhicule; et la charge reste stable dansl tous les cas.

Par ailleurs, la plate-forme permet de recevoir n'importe quel type de conteneur, allant du portepalette, à la cabane de chantier, en passant par toutes sortes de bennes ou outillages lourds. Le dispositif permet notamment d'utiliser plusieurs conteneurs, par example d'échanger un conteneur vide contre un plein, et donc de diminuer les coûts de manutention.

Enfin, son faible encombrement combiné aux avantages précédents, permet son utilisation dans les endroits étroits, ruelles par exemple, là où les camions traditionnels ne peuvent aller.

## Revendications

1. Dispositif de manoeuvre de conteneur (22) du type comportant un support (4) et une plateforme (7) mobile articulés l'un par rapport à l'autre, le support étant monté sur un véhicule léger (2), ou muni de deux roues (5) de remorquage sur essieu (6) et d'un point d'accrochage à un véhicule léger, et comportant un mat (8) articulé audit support (4) à sa partie inférieure (10) et muni à son sommet d'une poulie (12) de renvoi d'un câble (20), caractérisé en ce que le câble (20) est lié d'une part à un point fixe (11) de levage de la plateforme et, d'autre part à un moyen de traction (21) du câble fixé sur la plateforme, en ce que le support (4) comporte deux pivots (14) formant axe (15) de pivotement pour la plateforme, et en ce que la longueur du bras de levier entre l'axe de pivotement (15) et l'extrémité (16) de la plateforme qui se baisse, est supérieure à la distance de l'axe de pivotement (15) au sol, de sorte que l'extrémité (16) de la plateform, en prenant appui sur le sol coopère au levage de la plateforme lequel s'effectue par une rotation de la plateforme autour du point d'appui sur le sol.

2. Dispositif de manoeuvre de conteneur selon la revendication 1 caractérisé en ce que la plateforme (7) pivote autour d'un axe (15) disposé le plus près possible de la verticale passant par le centre de gravité de la plateform uniformément chargée, mais derrière lui et derrière l'esseieu (6).

3. Dispositif selon la revendication 1, caractérisé en ce que l'extrémité (16) de la plate-forme qui s'abaisse vers le sol comporte au moins une paire de roues (17), lesdites roues assurant l'appui et un roulement sur le sol.

4. Dispositif selon l'une quelconque des revendications précédentes, caractérisé en ce que le câble (20) passe dans un moufle composé de trois poulies de renvoi: une première poulie (12) montée au sommet du mât, une deuxième poulie (18) solidaire de la plate-formé placée à proximité du point d'accrochage (11) du câble (20) et de l'autre coté du mât, et une troisième poulie (19), montée à l'extrémité antérieure du plateau porte-conteneur (23).

5. Dispositif selon la revendication 4, caractérisé en ce que la deuxième poulie (18) est maintenue par deux tiges plates parallèles (24) soudées à l'extrémité de la plate-forme qui se lève et formant avec elle un angle de 45° à 60°.

6. Dispositif selon la revendication 5, caractérisé en ce que le mât (8) oscille librement entre la poulie (18) et le point de fixation (11), et entre les deux tiges (24).

7. Dispositif selon la revendication 4, caractérisé en ce que la plate-forme supporte des glissières parallèles (50a, 50b) pour guider le conteneur.

8. Dispositif selon la revendication 7, caractérisé en ce que l'extrémité (52, 52b) des glissières qui s'abaisse comporte une rampe d'accès ou de sortie en forme de glissière, escamotable (53, 54, 55, 56).

9. Dispositif selon la revendication 7, caractérisé en ce que chaque glissière (50a, 50b) comporte un doigt (57) de guidage et verrouillage du conteneur mobile (22), coopérant avec l'élément de verrouillage (58) femelle correspondant monté sur ledit conteneur.

10. Dispositif selon les revendications 8 et 9, caractérisé en ce que l'élément de verrouillage (58) est l'organe de commande de la rampe escamotable (53 à 56).

11. Dispositif selon l'une quelconque des revendications précédentes, caractérisé en ce que la plate-forme (7) comporte un verrou (60) de blocage du conteneur (22, 23).

**Patentansprüche**

1. Manövriervorrichtung für Behälter (22), des Typs mit einem Gestell (4) und einer beweglichen Plattform (7), die verschwenkbar aneinander befestigt sind, wobei das Gestell auf einem Leichtfahrzeug (2) befestigt oder mit zwei Schleppprädern (5) auf einer Achse (6) sowie mit einem Ankoppelpunkt an ein Leichtfahrzeug versehen ist, und mit einem Mast (8), der an seinem unteren Abschnitt (10) verschwenkbar am Gestell (4) befestigt und an seinem oberen Ende mit einer Umlenkrolle (12) für ein Kabel (20) versehen ist, dadurch gekennzeichnet, daß das Kabel (20) einerseits an einen Fixpunkt (11) zum Anheben der Plattform und andererseits an eine auf der Plattform befestigte Kabel-Zugeinrichtung (21) angeschlossen ist, daß das Gestell (4) zwei Drehzapfen (14) aufweist, die eine Verschwenkachse (15) für die Plattform ausbilden, und daß die Länge des Hebelarmes zwischen der Verschwenkachse (15) und dem sich absenkenden Ende (16) der Plattform größer als der Abstand der Verschwenkachse (15) vom Boden ist, und zwar derart, daß dieses Ende (16) der Plattform durch Abstützen am Boden, mit dem Anheben der Plattform zusammenwirkt, indem sich die Plattform um den Abstützpunkt am Boden verdreht.

2. Manövriervorrichtung für Behälter nach Anspruch 1, dadurch gekennzeichnet, daß die Plattform (7) um eine Achse (15) verschwenkbar ist, die möglichst nahe an der Vertikalen durch den Schwerpunkt der Plattform bei gleichmäßig verteilter Belastung, jedoch hinter diesem und hinter der Achse (6), liegt.

3. Vorrichtung nach Anspruch 1, dadurch gekennzeichnet, daß das zum Boden hin absenkbare Ende (16) der Plattform wenigstens ein Paar von Rädern (17) aufweist, die eine Abstützung sowie ein Verfahren auf dem Boden zulassen.

4. Vorrichtung nach einem der vorangegangenen Ansprüche, dadurch gekennzeichnet, daß das Kabel (20) in einem Flaschenzug mit drei Umlenkrollen läuft, wobei eine erste Umlenkrolle (12) am Ende des Mastes montiert, eine zweite Umlenkrolle (18) dem Ankoppelpunkt (11) des Kabels (20) benachbart auf der Plattform befestigt sowie auf der anderen Seite des Mastes angeordnet und eine dritte Umlenkrolle (19) am vorderen Ende der Behältertrageplatte (23) angebracht ist.

5. Vorrichtung nach Anspruch 4, dadurch gekennzeichnet, daß die zweite Umlenkrolle (18) von zwei parallelen flachen Stangen (24) gehaltert wird, die an das anhebbare Ende der Plattform angeschweißt sind und mit dieser einen Winkel von 45° bis 60° ausbilden.

6. Vorrichtung nach Anspruch 5, dadurch gekennzeichnet, daß der Mast (8) zwischen der Rolle (18) und dem Befestigungspunkt (11) sowie zwischen den beiden Stangen (24) frei verschwenkbar ist.

7. Vorrichtung nach Anspruch 4, dadurch gekennzeichnet, daß die Plattform parallele Schienen (50a, 50b) zur Führung des Behälters trägt.

8. Vorrichtung nach Anspruch 7, dadurch gekennzeichnet, daß das absenkbare Ende (52a, 52b) der Schienen eine einziehbare Auffahr- bzw. Abfahrrampe (53, 54, 55, 56) in Schienenform aufweist.

9. Vorrichtung nach Anspruch 7, dadurch gekennzeichnet, daß jede Schiene (50a, 50b) einen Führungs- und Verriegelungsbolzen (57) für den beweglichen Behälter (22) aufweist, der mit einem entsprechenden Verriegelungsaufnahmeelement (58), das am Behälter befestigt ist, zusammenwirkt.

10. Vorrichtung nach den Ansprüchen 8 und 9, dadurch gekennzeichnet, daß das Verriegelungselement (58) das Steuerorgan für die einziehbare Rampe (53—56) ist.

11. Vorrichtung nach einem der vorangegangenen Ansprüche, dadurch gekennzeichnet, daß die Plattform (7) einen Bolzen (60) zum Arretieren des Behälters (22, 23) aufweist.

**Claims**

1. A handling device for a container (22) of the type having a support (4) and a movable platform (7) linked together, the support being mounted on a light vehicle (2), or having two caravanning wheels (5) on an axle (6) and a point for hooking to a light vehicle, and comprising a mast (8) linked at its lower part to said support (4) and provided at its top with a cable return pulley (12), characterized in that the cable (20) has one end connected to a fixed point (11) for the lifting of the platform, and the other end connected to cable traction means (21) attached to the platform, in that the support (4) comprises two pivots (14) forming a swivelling axis (15) for the platform, and in that the length of the lever arm between the swivelling axis (15) and the end (16) of the platform being lowered is greater than the distance between the swivelling axis (15) and the ground, so that the platform end (16), when resting on the ground, assists the lifting of the platform which is carried out by the rotation of the platform around the supporting point on the ground.

2. A handling device for a container as claimed in Claim 1, characterized in that the platform (7) swivels around an axis (15) placed as close as possible to the perpendicular passing through the gravity centre of the uniformly charged platform, but behind it and behind the axle (6).

3. A handling device as claimed in Claim 1, characterized in that the platform end (16) being lowered towards the ground comprises at least a couple of wheels (17) which ensure support and rolling on the ground.

4. A device as claimed in any one of the preceding Claims, characterised in that the cable (20) passes through a hoist composed of three return pulleys: a first pulley (12) mounted at the mast top, a second pulley (18) firmly attached to the platform and placed close to the fastening point (11) of the cable, and at the other side of the mast, a third pulley (19) mounted at the front end of the container supporting plate (23).

5. A device as claimed in Claim 4, characterized in that the second pulley (18) is held up by two parallel flat rods (24) welded onto the platform end being raised and which form an angle of 45° to 60° to the platform.

6. A device as claimed in Claim 5, characterized in that the mast (8) swings freely between the pulley (18) and the fastening point (11), and between the two rods (24).

7. A device as claimed in Claim 4, characterized in that the platform supports parallel sliding rails (50a, 50b) to guide the container.

8. A device as claimed in Claim 7, characterized in that the end (52a, 52b) of the sliding rails being lowered comprises an access or leaving ramp formed as a retractable sliding rail (53, 54, 55, 56).

9. A device as claimed in Claim 7, characterized in that each sliding rail (50a, 50b) comprises a finger (57) for guiding and catching the movable container (22), cooperating with the corresponding female catching element (58) mounted on said container.

10. A device as claimed in Claims 8 and 9, characterized in that the catching element (58) is the control means for the retractable ramp (53—56).

11. A device as claimed in any one of the preceding claims, characterized in that the platform (7) comprises latching means (60) for the container (22, 23).

EP 0 199 652 B1

Fig. 1

Fig. 2

1

EP 0 199 652 B1

Fig. 3

Fig. 4

Fig. 5